# EUROPÄISCHE PATENTANMELDUNG

(11) **EP 3 098 538 A1**
(43) Veröffentlichungstag der Anmeldung: **30.11.2016**
(21) Anmeldenummer: 16001132.6
(22) Anmeldetag: 19.05.2016
(51) Int. Cl.: F24J 2/52

(54) **SOLARMODULHALTEANORDNUNG**

(30) Priorität: 29.05.2015 DE 102015006717
(71) Anmelder: Sanavi, Armin, 70182 Stuttgart (DE)
(72) Erfinder: Sanavi, Armin, 70182 Stuttgart (DE)
(74) Vertreter: Stockinger, Armin Eugen

(57) **Zusammenfassung**

Die Erfindung betrifft eine Solarmodulhalteanordnung (1), umfassend mindestens ein, eine Klemmebene (17, 17') aufweisendes, Klemmdeckelstück (4) und mindestens ein, eine Widerlagerebene (18, 18') aufweisendes, Widerlager (5) sowie mindestens einen Schraubbolzen (6), der das Klemmdeckelstück (4) an dem Widerlager (5) hält. Es ist ein im wesentlichen quer zur Klemmebene (17, 17') ausgebildeter, zumindest abschnittsweise in eine im wesentlichen quer zur Widerlagerebene (18, 18') ausgebildete Klemmschenkelführung (10) eingreifender Klemmschenkel (8) vorgesehen.

## Beschreibung

Die Erfindung betrifft eine Solarmodulhalteanordnung, umfassend mindestens ein, eine Klemmebene aufweisendes, Klemmdeckelstück und mindestens ein, eine Widerlagerebene aufweisendes, Widerlager sowie mindestens einen Schraubbolzen, der das Klemmdeckelstück an dem Widerlager hält.

### Stand der Technik

Solarmodulhalteanordnungen sind bekannt. Sie dienen dazu, Solarmodule für den Aufbau von Solaranlagen in einer bestimmten Position und Ausrichtung auf einer Unterlage, insbesondere auf Befestigungsschienen, zu fixieren.

Eine solche Solarmodulhalteanordnung ist beispielsweise aus der DE 10 2013 018 418 A1 bekannt. Dort ist unter anderem ein Fußstück beschrieben, mit dem ein Solarmodul auf einer Befestigungsschiene festgelegt wird. Dieses Fußstück hat einen dem festzulegenden Solarmodul zugewandten Halteabschnitt, der so dimensioniert ist, dass er das Solarmodul aufnehmen kann; mit anderen Worten: Seine lichte Weite (der Abstand zwischen den das Solarmodul fixierenden Elementen) muss der Stärke des Solarmoduls entsprechen.

Daran ist nachteilig, dass ein bestimmtes Fußstück immer nur für Solarmodule einer bestimmten Stärke verwendet werden kann. Dies führt zu einer unnötigen Systembindung und zu vergleichsweise hohen Kosten, da für verschiedene Solarmodule unterschiedliche Halteanordnungen Fußstücke vorgehalten werden müssen.

Um eine universellere Stärkenanpassung zu ermöglichen, schlägt die DE 10 2013 018 419 A1 vor, ein Klemmelement über einen Schraubenkanal mittels eines Schraubbolzens zu fixieren, wobei die Einschraubtiefe in gewissen Grenzen variabel und somit auch eine Stärkenanpassung hinsichtlich der festzulegenden Solarmodule möglich ist. An dieser an sich bereits sehr guten Ausführung ist nachteilig, dass das Klemmelement nur über die Verschraubung des Schraubbolzens im Schraubenkanal gehalten wird, und die tatsächliche Kraftbeaufschlagung des zu haltenden Solarmoduls eine direkte Funktion des Anzugsdrehmoments des Schraubbolzens ist, so dass bei der Montage in sehr ungünstigen Fällen Fehler gemacht werden können, die im ungünstigsten Fall eine unerwünschte Auswirkung auf das Solarmodul haben können. Auch ist die Passung und damit die Qualität der Festlegung abhängig von der Form des Solarmoduls und der Formanpassung des Klemmelements im Halteabschnitt.

Weiter ist aus der DE 199 34 059 A1 eine Vorrichtung zum Befestigen von Solarmodulen bekannt, die ein mehrfach T-geschlitztes Tragprofil nutzt, und wobei ein Schaft eines Befestigungsmittels mit seinem einen Ende in einen der T-Schlitze eingreift und eine Rast- oder Klemmverbindung bewirkt, und das Befestigungsmittel mit seinem anderen Ende einen Rand des Solarmoduls übergreift und das Solarmodul auf das Tragprofil presst. Daran ist nachteilig, dass die Halte- beziehunsgweise Klemmkraft lediglich punktuell über die Verrastung des Befestigungsmittels aufgebracht wird; einer einfachen Montage stehen hier eine unsichere Dauerhaltbarkeit und -stabilität sowie eine Punktbelastung des Solarmoduls gegenüber. Die Sicherheit der Verbindung ist hier nicht dauerhaft gewährleistet, da lediglich eine Rast- oder Klemmwirkung des Befestigungsmittels bewirkt wird, die in ungünstigeren Lagen der Windlast sowie thermischen Maßänderungen aufgrund der nicht besonders hohen erzielbaren Klemmkraft auf Dauer nicht wird zuverlässig standhalten können. Auch ist für die Montage oder Wartung die Zugänglichkeit jedes der einzurastenden Befestigungsmittel erforderlich. Weiter ist auch hier nachteilig, dass nur Solarmodule gehalten werden können, die dem stufigen Klemmraster des Befestigungsmittels entsprechen. Zwar können verschieden starke Module gehalten werden, aber eben immer nur solche, die dem Raster des Befestigungsmittels entsprechen.

Aufgabe der Erfindung ist es, die genannten Probleme in größtmöglichem Umfang zu minimieren und eine weitgehend universell einsetzbare Solarmodulhalteanordnung bereitzustellen, die für eine Vielzahl von unterschiedlich starken Solarmodulen gleichermaßen vorteilhaft eingesetzt werden kann.

### Offenbarung der Erfindung

Hierzu wird eine Solarmodulhalteanordnung vorgeschlagen, die mindestens ein, eine Klemmebene aufweisendes, Klemmdeckelstück und mindestens ein, eine Widerlagerebene aufweisendes, Widerlager sowie mindestens einen Schraubbolzen, der das Klemmdeckelstück an dem Widerlager hält, umfasst. Dabei ist ein im wesentlichen quer zur Klemmebene ausgebildeter, zumindest abschnittsweise in eine im wesentlichen quer zur Widerlagerebene ausgebildeten Klemmschenkelführung eingreifender Klemmschenkel vorgesehen. Die Solarmodulhalteanordnung besteht demnach aus dem Widerlager und dem Klemmdeckelstück, wobei diese bei der Montage mittels des mindestens einen Schraubbolzens miteinander verbunden werden. Das Klemmdeckelstück ist hierbei im wesentlichen L-förmig ausgebildet, nämlich so, dass quer zu seiner Klemmebene (in der das zu haltende Solarmodul anliegt) der Klemmschenkel steht. Dieser Klemmschenkel greift im montierten Zustand in die Klemmschenkelführung ein, die am Widerlager ausgebildet ist, nämlich im wesentlichen quer zur Widerlagerebene, an der das Solarmodul mit seiner der Klemmebene abgewandten Seite gehalten wird. Das Solarmodul wird also zwischen Klemmebene und Widerlagerebene gehalten. Quer zu diesen beiden Ebenen sind der Klemmschenkel beziehungsweise die Klemmschenkelführung ausgebildet, wobei der Klemmschenkel in letztere eingreift. Durch dieses Eingreifen des Klemmschenkels in die Klemmschenkelführung wird in vorteilhafter Weise eine Positionierung und Ausrichtung des Klemmdeckelstücks bewirkt, so dass Klemmebene und Widerlagerebene einerseits im wesentlichen genau parallel das Solarmodul beaufschlagen und eine unerwünschte punktuelle oder linienförmige Kraftbeaufschlagung vermieden wird, andererseits aber eine Flexibilität hinsichtlich der Stärke der verwendeten Solarmodule gewährleistet ist, die lediglich davon abhängt, wie weit der Klemmschenkel noch in die Klemmschenkelführung eintauchen kann. Bei sehr dünnen Solarmodulen wird der Klemmschenkel weiter in die Klemmschenkelführung eintauchen, bei sehr starken Solarmodulen weniger weit. Dennoch ist dadurch, dass der Klemmschenkel über die Klemmschenkelführung eine Ausrichtung des Klemmdeckelstücks bewirkt und sich bei Anziehen des Schraubbolzens der Klemmschenkel vorteilhaft in der Klemmschenkelführung selbst verkeilt, eine stets saubere und gleichmäßige Kraftbeaufschlagung des Solarmoduls bei größtmöglicher Variabilität gegeben.

Der Klemmschenkel des Klemmdeckelstücks seinerseits wird durch die Kräftezerlegung beim Anziehen des Schraubbolzens gegen Innenwandungen der Klemmschenkelführung gedrückt und dort festgelegt. Näheres zeigen die Figuren.

In einer weiteren Ausführungsform ist vorgesehen, dass der Klemmschenkel an seinem der Klemmebene gegenüber liegenden Ende eine im wesentlichen kreisumfangsförmige Ausbildung aufweist. Dies meint, dass die der Klemmebene entfernt liegenden Kanten des Klemmschenkels in einer solchen Weise ausgeführt oder gebrochen sind, dass sich eine im wesentlichen kreisförmige Querschnittsform ergibt, das entfernte Ende des Klemmschenkels demnach im Querschnitt im wesentlichen einen Halbkreis beschreibt. Dadurch wird bewirkt, dass der Klemmschenkel in der Klemmschenkelführung, abhängig von seiner Einbringtiefe beim Festschrauben des Schraubbolzens, nicht nur an einer vergleichsweise scharfen Kante anliegt, sondern stets eine möglichst flächige Anlage des Klemmaschenkels in der Klemmschenkelführung erreicht wird. Ferner wird auch die Einbringung erleichtert, weil kein Hängenbleiben an scharfen Kanten erfolgt.

In einer besonders vorteilhaften Ausführungsform ist der Klemmschenkel zwischen der Klemmebene und der kreisumfangsförmigen Ausbildung zumindest an einer Klemmschenkelfläche zumindest abschnittsweise hinterschnitten. Die Materialstärke des in die Klemmschenkelführung eintauchenden Abschnitts des Klemmschenkels ist demnach in zumindest einem Abschnitt und an mindestens einer Klemmschenkelfläche reduziert. Dies bewirkt, dass, im Querschnitt betrachtet, die kreisumfangförmige Ausbildung am entfernteren Ende des Klemmschenkels an der Klemmschenkelfläche hervorsteht, die hinterschnitten ist. Sie bildet dort gewissermaßen, im Querschnitt betrachtet, mehr als einen Halbkreis aus, beispielsweise einen Dreiviertelkreis, und bewirkt, dass die Anlage des Klemmschenkels an der korrespondierenden Innenfläche der Klemmschenkelführung im wesentlichen tangential zu dieser kreisumfangförmigen Ausbildung erfolgt, mithin über die Längserstreckung des Klemmschenkels und der korrespondierenden Innenfläche der Klemmschenkelführung also in etwa linienförmig an einer so ausgebildeten Auflagelinie.

Hierdurch wird eine sehr hohe Klemm- und Haltekraft an eben dieser Auflagelinie bewirkt, so dass bei bereits relativ geringem Anzugsdrehmoment des Schraubbolzens und entsprechendem Krafteintrag durch das hierdurch erfolgende, leichte Verkanten des Klemmschenkels in der Klemmschenkelführung, ein sehr hohes Haltevermögen durch den so bewirkten Reibschluss bewirkt wird. Der Krafteintrag in das zu haltende Solarmodul selbst kann demnach vergleichsweise gering ausfallen, die Belastung der Struktur des Solarmoduls in den Abschnitten, in denen es durch die Solarmodulhalteanordnung geklemmt wird, ist demnach vorteilhaft gering, so dass Strukturbeeinträchtigungen aufgrund eben dieser Klemmung nicht zu erwarten sind. Gleichzeitig wird durch die Hinterschneidung eine gute Beweglichkeit des Klemmdeckelstücks bei der Montage bewirkt, da der Klemmschenkel selbst innerhalb der Klemmschenkelführung so lange eine gute Freigängigkeit aufweist, bis der Schraubbolzen entsprechend angezogen wird.

In einer weiteren Ausführungsform ist vorgesehen, dass die Klemmschenkelführung als im wesentlichen U-förmige Profilführung zwischen zwei Strangprofilwänden des Widerlagers ausgebildet ist. Die Klemmschenkelführung wird demnach so gebildet, dass ihre Wandungen als Strangprofil / Strangpressprofil ausgebildet sind und gewissermaßen die Schenkel eines U darstellen. Das gesamte Widerlager lässt sich so vergleichsweise kostengünstig und in gleichbleibender Materialstabilität und mit zuverlässig gleichbleibend beabstandeten Wandungen als Strangpressprofil ausbilden, wesentliche Nacharbeiten sind zur Herstellung des Widerlagers nicht erforderlich.

In einer bevorzugten Ausführungsform ist die eine Strangprofilwand eine Außenwand eines Tunnelprofils des Widerlagers. Die eine Strangprofilwand, die die Klemmschenkelführung bildet, ist also Bestandteil eines Tunnelprofils; dieses Tunnelprofil schließt sich demnach unmittelbar an die Klemmschenkelführung an. Durch die Ausbildung als Tunnelprofil lässt sich eine sehr hohe Stabilität bei vergleichsweise geringem Gewicht erreichen. Klemmkräfte, die durch den Klemmschenkel auf die Strangprofilwand aufgebracht werden, vor allem in der Ausführungsform des hinterschnittenen Klemmschenkels, werden sehr gut in der Struktur des Tunnelprofils aufgefangen und abgestützt, so dass auch bei hohem Krafteintrag eine bestmögliche Strukturstabilität und Verwindungssteifigkeit gewährleistet ist. Gerade auch bei Krafteintrag durch Windeinfluss über zu haltende Solarmodul (das naturgemäß eine erhebliche Windlast aufweist), ist in dieser Ausführungsform dennoch eine besonders hohe Stabilität der Solarmodulhalteanordnung und damit eine hervorragende Haltestabilität für das Solarmodul gewährleistet.

In einer weiteren, besonders bevorzugten Ausführungsform weist die andere Strangprofilwand eine sich einem Profilgrund der U-förmigen Profilführung gegenüber liegend erweiternde Materialstärke auf. Die andere Strangprofilwand ist diejenige, die der einen Strangprofilwand gegenüberliegt, und mit dieser zusammen die U-förmige Profilführung, nämlich die Klemmschenkelführung, ausbildet. In dem Ausführungsbeispiel, in dem die eine Strangprofilwand als Außenwand des Tunnelprofils ausgebildet ist, liegt die andere Strangprofilwand dem Tunnelprofil gegenüber, zwischen sich bilden sie die Klemmschenkelführung. Diese andere Strangprofilwand nun weist eine Materialstärke auf, die über ihre Erstreckung zwischen Profilgrund und oberem Abschluss (der Klemmebene näherliegend) nicht gleichbleibend ist, sondern von dem oberen Abschluss hin zum dem Profilgrund näherliegenden Ende außenseitig stärker wird. Die die Klemmschenkelführung ausbildenden Strangprofilwände innenseitig sind nach wie vor gleich beabstandet und weisen zueinander parallele Flächen auf. Außenseitig aber wird die Materialstärke der Strangprofilwand größer, je näher sie sich ihrem unteren Bereich annähert, bevorzugt dergestalt, dass die Stärke gewissermaßen im Querschnitt keilförmig zunimmt. Dadurch wird eine erhöhte Verformungsstabilität bewirkt, die einem Ausweichen dieser anderen Strangprofilwand nach außen unter der Krafteinwirkung des sich verspannenden Klemmschenkels entgegenwirkt und dadurch eine gleichbleibend gute Haltekraftaufbringung sichert.

In einer weiteren bevorzugten Ausführungsform ist vorgesehen, dass das Tunnelprofil an seiner der Klemmebene zunächst liegenden Oberseite eine verstärkte Klemmlagerseite aufweist. Diese Klemmlagerseite, die die obere Tunnelwandung bildet, ist stärker als die übrigen Tunnelwandungen ausgebildet, insbesondere um ein mehrfaches stärker. Auf diese Weise wird hier eine erhöhte Materialfestigkeit und Strukturstabilität erreicht, gleichzeitig wird genügend Substanz zur Bearbeitung bereitgestellt.

Weiter ist vorgesehen, dass in einer Ausführungsform in die Klemmlagerseite eine Gewindebohrung eingebracht ist, die mit dem Schraubbolzen zusammenwirkt. Der Schraubbolzen wird demzufolge in die Klemmlagerseite des Tunnelprofils eingeschraubt, weitere Schraubenmuttern, Nut- oder Klemmsteine sind nicht erforderlich. Die das Solarmodul haltende Klemmkraft wird demzufolge durch die Verschraubung des Schraubbolzens in dem Widerlager selbst bewirkt, nämlich in dessen Tunnelprofil. Dies erlaubt eine hohe Flexibilität in der Herstellung und Fertigung, weil diese Gewindebohrungen bedarfsspezifisch eingebracht werden können, bei gleichzeitig optimaler Materialstabilität und besonders leichter Montage.

In einer anderen bevorzugten Ausführungsform ist vorgesehen, dass am Widerlager die Klemmschenkelführung parallel zu einem Schraubenkanal ausgebildet ist. Parallel zu der Klemmschenkelführung, beispielsweise auch direkt an diese anschließend und unter gemeinsamer Nutzung einer Strangprofilwand, ist ein Schraubenkanal angeordnet. Ein Schraubenkanal ist eine im Querschnitt im wesentlichen U-förmige Ausbildung, ähnlich der Klemmschenkelführung, die das Verschrauben von Schraubbolzen gestattet und hierbei in der Art einer Gewindemutter wirkt, indem sie bei im wesentlich parallelen Seitenwänden, die im wesentlichen so beabstandet sind wie der Durchmesser im Bereich der Zahnflanken des Schraubbolzens ist, nach innen weisende Strukturen aufweisen, die mit den Zahnflanken des Schraubbolzens zur Ausbildung einer Verschraubung zusammenwirken, also im weitesten Sinne ein Innengewinde oder Abschnitte eines Innengewindes ausbilden. Auf diese Weise kann die Verschraubung des Schraubbolzens ohne in einen Tunnelabschnitt eingebrachte Gewindebohrung erfolgen, ja sogar ganz ohne Tunnelabschnitt. Die Position der Verschraubung ist hierbei über die ganze Länge des Schraubenkanals frei wählbar und nicht an vorgegebene Gewindebohrungen gebunden, was eine erhebliche Freiheit in der Konstruktion und Montage mit sich bringt.

In einer Ausführungsform ist vorgesehen, dass das Widerlager als Fußstück mit mindestens einer Auflage ausgebildet ist, die der Klemmebene gegenüber liegt. Unter einem Fußstück wird bei einer geneigten Anordnung von Solarmodulanlagen die Solarmodulhalteanordnung verstanden, die das der Unterlage näher liegende Ende des Solarmoduls aufnimmt. Die andere, das der Unterlage entfernter liegende Ende des Solarmoduls aufnehmende Solarmodulhalteanordnung wird als Ständerelement bezeichnet. Die Auflage ist der Bereich des Fußstücks, das in Kontakt mit der Unterlage tritt und zur Abstützung der Solarmodulhalteanordnung auf der Unterlage dient. Diese Auflage kann durchgehend oder unterbrochen ausgebildet sein, im wesentlichen plan oder auch durch Abstützelemente. Wesentlich ist hier allein, dass die Auflage eine gute und in sich stabile Abstützung der Solarmodulhalteanordnung auf der Unterlage bewirkt, insbesondere im Zusammenwirken mit einer oder mehreren Verschraubungen.

In einer anderen Ausführungsform ist vorgesehen, dass das Widerlager als Ständerelement ausgebildet. Vorteilhaft wird diese Form der Solarmodulhalteanordnung auch für Ständerelemente verwendet. Im Unterschied zu einem Fußstück weist das Ständerelement eine größere Bauhöhe auf, um zusammen mit dem Fußstück die schräge Anordnung des Solarmoduls zu bewirken, um eine optimale Anpassung an den Sonneneinfallswinkel zu erreichen. Die größere Bauhöhe wird beispielsweise durch Seitenwände eines Strangpressprofils in entsprechender Ausdehnung bewirkt. Das Ständerelement kann im Querschnitt symmetrisch oder asymmetrisch ausgestaltet sein.

In einer weiteren Ausführungsform ist das Widerlager als Ost-West-Ständerelement ausgebildet. Ein Ost-West-Ständerelement nimmt zwei Solarmodule auf, an jeder seiner Seiten eines, zwischen denen es selber angeordnet ist. Hierdurch wird eine "satteldachartige" Anordnung von Solarmodulen bewirkt, die einmal zur einen, dann zur anderen Seite geneigt sind. Näheres zeigen die Figuren.

In einer Ausführungsform ist das Klemmdeckelstück im wesentlichen T-förmig ausgebildet. Es erinnert in seinem Querschnitt an den Großbuchstaben T, wobei der Schenkel des T der Klemmschenkel ist, der in die Klemmschenkelführung eingreift. Die Dachseite des T bildet unterseitig an seinen beiden dem Klemmschenkel anschließenden Unterseiten die Klemmebenen aus, so dass zwei Solarmodule gehalten werden können, nämlich eines diesseits des Klemmschenkels und das andere jenseits des Klemmschenkels. Gerade in Verbindung mit einem Ost-West-Ständerelement ist diese Ausführungsform vorteilhaft, weil mit nur einer Verschraubung zwei Solarmodule festgelegt werden können.

Weitere vorteilhafte Ausführungsformen ergeben sich aus den Unteransprüchen und aus Kombinationen derselben.

Nachstehend wird die Erfindung anhand von Ausführungsbeispielen näher beschrieben, ohne aber hierauf beschränkt zu sein.

Es zeigen
- Figur 1: eine Solarmodulhalteanordnung auf einer Befestigungsschiene
- Figur 2: ein Klemmdeckelstück
- Figur 3: ein als Fußstück ausgebildetes Widerlager
- Figur 4: eine Solarmodulhalteanordnung mit einem als Ost-West-Ständerelement ausgebildeten Widerlager und einem T-förmigen Klemmdeckelstück

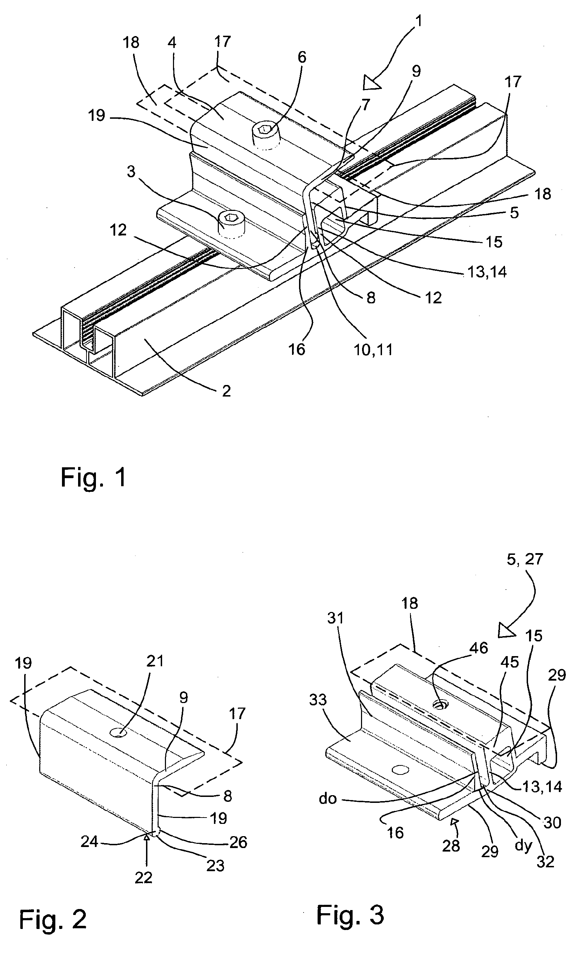

Figur 1 zeigt eine Solarmodulhalteanordnung 1 auf einer Befestigungsschiene 2, an der sie mittels einer Verschraubung 3 gehalten ist. Die Solarmodulhalterung 1 umfasst ein Klemmdeckelstück 4 und ein Widerlager 5 sowie einen Schraubbolzen 6. Das Klemmdeckelstück 4 weist eine L-förmige Ausbildung 7 auf, bestehend aus einem Klemmschenkel 8 und einem Deckelschenkel 9. Der Klemmschenkel 8 ist in einer Klemmschenkelführung 10 eingebracht und geführt, die als U-förmige Profilführung 11 am Widerlager 5, nämlich von Strangprofilwänden 12 des Widerlagers 5, ausgebildet ist. Die eine Strangprofilwand 12, 13 ist als Außenwand 14 eines Tunnelprofils 15 ausgebildet, der die andere Strangprofilwand 12, 16 parallel verlaufend gegenübersteht.

Das Klemmdeckelstück 4 verläuft unterseitig am Deckelschenkel 9 in einer Klemmebene 17, während auf dem Widerlager 5 oberseitig eine Widerlagerebene 18 verläuft. Der Klemmschenkel 8 ist im wesentlichen quer / senkrecht zur Klemmebene 17 ausgebildet. Ein hier nicht dargestelltes, zu haltendes Solarmodul wird zwischen der Klemmebene 17 und der Widerlagerebene 18 angeordnet, dergestalt, dass es auf das Widerlager 5 auf der Widerlagerebene 18 aufgelegt und in der Klemmebene 17 durch das Klemmdeckelstück 4 bei Einbringung und Anzug des Schraubbolzens 6 kraftbeaufschlagt und somit festgelegt wird. Der Klemmschenkel 8 wird bei Anzug des Schraubbolzens 6 in der Klemmschenkelführung 10 dadurch festgelegt, dass aufgrund der Kraftzerlegung der Klemmschenkel 8 mit seinen Klemmschenkelflächen 19 an Innenwandungen 20 der Klemmschenkelführung 10 gepresst wird. Hierdurch wird das nicht dargestellte Solarmodul in der genannten Position zuverlässig fixiert, ohne dass die Solarmodulhalteanordnung 1 auf bestimmte Solarmodulstärken festgelegt wäre. Die einbringbaren und zu haltenden Solarmodule sind in ihrer Stärke lediglich dadurch beschränkt, dass der Klemmschenkel 8 noch so weit in die Klemmschenkelführung 10 eingreifen muss, dass eine sichere Verklemmung des Klemmschenkels 8 in der Klemmschenkelführung bei Anzug des Schraubbolzens 6 gewährleistet ist.

Figur 2 zeigt das Klemmdeckelstück 4 in seiner L-förmigen Ausbildung 7, bestehend aus dem Klemmschenkel 8 und dem Deckelschenkel 9. In den Deckelschenkel 9 ist eine Ausnehmung 21 eingebracht, die zum Durchstecken des in Figur 1 gezeigten Schraubbolzens 6 dient. Der Klemmschenkel 8 weist außenseitig die Klemmschenkelflächen 19 auf, von denen die innenliegende, also die unter dem Deckelschenkel 9 befindliche, hinterschnitten ist. Hierzu ist an dem Klemmschenkel an seinem der Klemmebene 17 gegenüberliegenden, äußeren Ende 22 eine kreisumfangförmige Ausbildung 23 vorgesehen, die im Querschnitt betrachtet in etwa einen Dreiviertelkreis 24 darstellt. Diese kreisumfangförmige Ausbildung 23 bildet, isoliert betrachtet, gewissermaßen einen Dreiviertelrundstab 25, der im Bereich seines unter dem Deckelschenkel 9 liegenden Umfangs 26 die in Figur 1 dargestellte, eine Strangprofilwand 12, 13 linienförmig kraftbeaufschlagt, da bei Anzug des in Figur 1 gezeigten Schraubbolzens 6 diese eine Strangprofilwand 12, 13 tangential an dem Umfang 26 anliegt.

Figur 3 zeigt das Widerlager 5, das als Fußstück 27 ausgebildet ist, und das an seinem der Widerlagerebene 18 gegenüberliegenden Fußstückende 28 Auflagen 29 zur Abstützung des Fußstücks 27 an einer hier nicht dargestellten Unterlage, beispielsweise auf einer in Figur 1 gezeigten Befestigungsschiene 2, aufweist. Das Widerlager 5 ist als Strangpressprofilabschnitt 30 ausgebildet, mit dem Tunnelprofil 15, dessen Außenwand 14 die eine Strangprofilwand 13 bildet, der die andere Strangprofilwand 16 gegenübersteht, wodurch die Klemmschenkelführung 10 als U-förmige Profilführung gebildet wird. Die hier gezeigte andere Strangprofilwand 16 weist eine sich erweiternde Materialstärke d₀ bis d_{y} auf, beginnend etwa (aber nicht notwendigerweise) auf halber Höhe 31 der anderen Profilwand 16, so dass die Materialstärke d_{y} nahe einem Profilgrund 32 stärker ist als auf halber Höhe 31. Hierdurch wird eine bessere Krafteinleitung in einen Widerlagerfußbereich 33 bewirkt und eine Verformung der anderen Strangprofilwand durch das Verklemmen des in Figur 1 gezeigten Klemmschenkels 8 des Klemmdeckelstücks 4 bei Anzug des Schraubbolzens 6 vermieden. Das Tunnelprofil 15 weist oberseitig eine verstärkte Klemmlagerseite 45 auf, in die eine Gewindebohrung 46 zur Aufnahme des in Fig. 1 dargestellten Schraubbolzens 6 eingebracht ist.

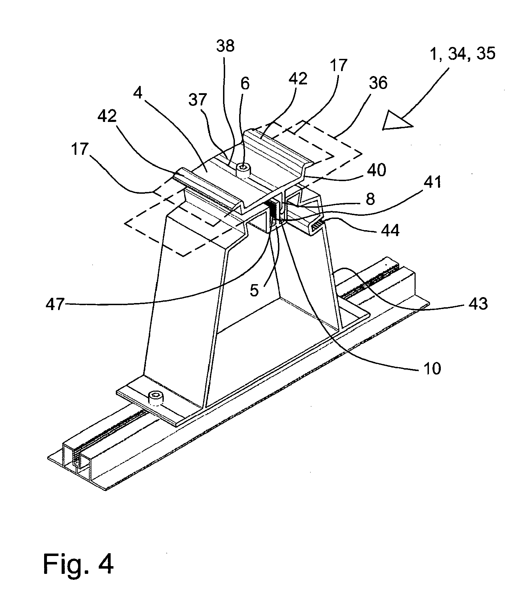

Figur 4 zeigt eine Solarmodulhalteanordnung 1, die als Ständerelement 34 ausgebildet ist, nämlich als Ost-West-Ständerelement 35. Dieses Ost-West-Ständerelement 35 weist zwei entgegengesetzt aus einer Horizontalbezugsebene 36 heraus nach unten geneigte Widerlagerebenen 18, 18' auf, denen zwei in gleicher Weise aus der Horizontalbezugsebene 36 heraus geneigte Klemmebenen 17, 17' entsprechen, die unterseitig einem hier in T-Form 37 ausgebildeten Klemmdeckelstück 4 ausgebildet sind, und wobei das Klemmdeckelstück 4 im wesentlichen symmetrisch einer Mittellinie 38 ausgebildet ist, mit Ausnahme des Klemmschenkels 8, der näher zu einem Klemmdeckelstückende 40 ausgebildet ist und in die Klemmschenkelführung 10 eingreift. Die Klemmebenen 17, 17' sind hier in der T-förmigen Ausbildung des Klemmdeckelstücks 4 beabstandet zum Klemmschenkel 8 an einer jeweils an beiden Seiten linear durchgehend ausgebildeten Klemmnase 42, 42' ausgebildet.

Parallel zu der Klemmschenkelführung 10 ist in dem Widerlager 5 ein Schraubenkanal ausgebildet, der mit dem Schraubbolzen 6 korrespondiert und zu dessen Verschraubung dient, indem er an seinen Innenwänden 41 Greifstrukturen 47 aufweist, die mit hier nicht dargestellten Zahnflanken eines hier nicht dargestellten Gewindes des Schraubbolzens 6 in der Art einer Schraubenmutter zusammenwirken.

Das Ständerelement 34 weist an einem Ständerschenkel 43 einen in wesentlichen quer hierzu - bevorzugt im Wege der Extrusion ausgebildeten - Zubehörschraubenkanal 44 auf, an dem mittels einfacher Verschraubung beispielsweise ein (hier nicht dargestellter) Windschirm montiert werden kann, um die Windführung und Windlast der Anordnung zu beeinflussen, oder eine Kabelführung.

### Bezugszeichenliste

- 1: Solarmodulhalteanordnung
- 2: Befestigungsschiene
- 3: Verschraubung
- 4: Klemmdeckelstück
- 5: Widerlager
- 6: Schraubbolzen
- 7: L-förmige Ausbildung
- 8: Klemmschenkel
- 9: Deckelschenkel
- 10: Klemmschenkelführung
- 11: U-förmige Profilführung
- 12: Strangprofilwand
- 13: die eine Strangprofilwand
- 14: Außenwand
- 15: Tunnelprofil
- 16: die andere Strangprofilwand
- 17, 17': Klemmebene
- 18, 18': Widerlagerebene
- 19: Klemmschenkelfläche
- 20: Innenwandung
- 21: Ausnehmung
- 22: Ende
- 23: kreisförmige Ausbildung
- 24: Dreiviertelkreis
- 25: Dreiviertelrundstab
- 26: Umfang
- 27: Fußstück
- 28: Fußstückende
- 29: Auflage
- 30: Strangpressprofilabschnitt
- 31: halbe Höhe
- 32: Profilgrund
- 33: Widerlagerfußbereich
- 34: Ständerelement
- 35: Ost-West-Ständerelement
- 36: Horizontalbezugsebene
- 37: T-Form
- 38: Mittellinie
- 40: Klemmdeckelstückende
- 41: Innenwand
- 42: Klemmnase
- 43: Ständerschenkel
- 44: Zubehörschraubenkanal
- 45: Klemmlagerseite
- 46: Gewindebohrung
- 47: Greifstrukturen
- d₀ - d_{y}: sich erweiternde Materialstärke

## Patentansprüche

1. Solarmodulhalteanordnung (1), umfassend mindestens ein, eine Klemmebene (17, 17') aufweisendes, Klemmdeckelstück (4) und mindestens ein, eine Widerlagerebene (18, 18') aufweisendes, Widerlager (5) sowie mindestens einen Schraubbolzen (6), der das Klemmdeckelstück (4) an dem Widerlager (5) hält, **gekennzeichnet durch** einen im wesentlichen quer zur Klemmebene (17, 17') ausgebildeten, zumindest abschnittsweise in eine im wesentlichen quer zur Widerlagerebene (18, 18') ausgebildeten Klemmschenkelführung (10) eingreifenden Klemmschenkel (8).

2. Solarmodulhalteanordnung (1) nach Anspruch 1, **dadurch gekennzeichnet, dass** der Klemmschenkel (8) an seinem der Klemmebene (17, 17') gegenüber liegenden Ende (22) eine kreisumfangsförmige Ausbildung (23) aufweist.

3. Solarmodulhalteanordnung (1) nach einem der vorhergehenden Ansprüche, **dadurch gekennzeichnet, dass** der Klemmschenkel (8) zwischen der Klemmebene (17, 17') und der kreisumfangsförmigen Ausbildung (23) zumindest an einer Klemmschenkelfläche (19) zumindest abschnittsweise hinterschnitten ist.

4. Solarmodulhalteanordnung (1) nach einem der vorhergehenden Ansprüche, **dadurch gekennzeichnet, dass** die Klemmschenkelführung (10) als im wesentlichen U-förmige Profilführung (11) zwischen zwei Strangprofilwänden (12) des Widerlagers (5) ausgebildet ist.

5. Solarmodulhalteanordnung (1) nach einem der vorhergehenden Ansprüche, **dadurch gekennzeichnet, dass** die eine Strangprofilwand (12, 13) eine Außenwand (14) eines Tunnelprofils (15) des Widerlagers (5) ist.

6. Solarmodulhalteanordnung (1) nach einem der vorhergehenden Ansprüche, **dadurch gekennzeichnet, dass** die andere Strangprofilwand (12, 16) eine sich einem Profilgrund (32) der U-förmigen Profilführung (11) gegenüber liegend erweiternde Materialstärke (d₀-d_{y}) aufweist.

7. Solarmodulhalteanordnung (1) nach einem der vorhergehenden Ansprüche, **dadurch gekennzeichnet, dass** das Tunnelprofil (15) an seiner der Klemmebene (17, 17') zunächst liegenden Oberseite eine verstärkte Klemmlagerseite (45) aufweist.

8. Solarmodulhalteanordnung (1) nach einem der vorhergehenden Ansprüche, **gekennzeichnet durch** mindestens eine in die Klemmlagerseite (45) eingebrachte, mit dem Schraubbolzen (6) zusammenwirkende Gewindebohrung (46).

9. Solarmodulhalteanordnung (1) nach einem der vorhergehenden Ansprüche, **dadurch gekennzeichnet, dass** an dem Widerlager (5) die Klemmschenkelführung (10) parallel zu einem Schraubenkanal ausgebildet ist.

10. Solarmodulhalteanordnung (1) nach einem der vorhergehenden Ansprüche, **dadurch gekennzeichnet, dass** das Widerlager (5) als Fußstück (27) mit mindestens einer Auflage (29) ausgebildet ist, die der Klemmebene (17,17') gegenüber liegt.

11. Solarmodulhalteanordnung nach Ansprüchen 1 bis 9, **dadurch gekennzeichnet, dass** das Widerlager (5) als Ständerelement (34) ausgebildet ist.

12. Solarmodulhalteanordnung (1) nach Anspruch 11, **dadurch gekennzeichnet, dass** das Widerlager (5) als Ost-West-Ständerelement (35) ausgebildet ist.

13. Solarmodulhalteanordnung (1) nach einem der vorhergehenden Ansprüche, **dadurch gekennzeichnet, dass** das Klemmdeckelstück (4) im Querschnitt im wesentlichen T-förmig ausgebildet ist.
